# EUROPÄISCHE PATENTSCHRIFT

(11) **EP 2 698 211 B1**
(45) Veröffentlichungstag und Bekanntmachung des Hinweises auf die Patenterteilung: **15.03.2017**
(21) Anmeldenummer: 13003704.7
(22) Anmeldetag: 24.07.2013
(51) Int. Cl.: B05B 13/04, B25J 19/00, B25J 11/00, B25J 18/00, B05B 15/02

(54) **Roboter zur Beschichtung von Gegenständen**
Robot for coating workpieces
Robot pour le revêtement d'objets

(30) Priorität: 16.08.2012 DE 102012016354
(43) Veröffentlichungstag der Anmeldung: 19.02.2014
(73) Patentinhaber: Eisenmann SE, 71032 Böblingen (DE)
(72) Erfinder: Schulze, Herbert, D-71134 Aidlingen (DE); Streckert, Sandra, D-71063 Sindelfingen (DE)
(74) Vertreter: Heinrich, Hanjo

(56) Entgegenhaltungen:
- EP-A1- 1 270 087
- WO-A1-2012/005574
- DE-A1-102006 043 604
- DE-A1-102008 015 258
- JP-A- H10 192 750

## Beschreibung

Die Erfindung betrifft einen Roboter gemäß dem Oberbegriff des Anspruchs 1.

Derartige Roboter sind beispielsweise aus der EP 1 270 087 Al bekannt und werden insbesondere in Lackieranlagen zum Lackieren von Fahrzeugkarosserien, aber auch zum sonstigen Beschichten auch anderer Gegenstände, eingesetzt. Der meist mehrachsige Roboter führt die Applikationseinrichtung, insbesondere eine Spritzpistole oder einen Hochrotationszerstäuber, und kann aufgrund seiner Mehrachsigkeit der Kontur des zu beschichtenden Gegenstandes genau folgen.

Üblicherweise sind in der Nähe der Applikationseinrichtung an einem Armabschnitt des mehrachsigen Roboters Betriebsmittel angebracht, welche zum Betrieb der Applikationseinrichtung erforderlich sind. Zu solchen Betriebsmitteln zählen unter anderem unabhängig von dem Arbeitsprinzip der Applikationseinrichtung Lackförderpumpen, Druckluftsteuerungen, Reservoirs für Reinigungsmittel und dergleichen.

Häufig arbeitet die Applikationseinrichtung nach dem elektrostatischen Prinzip. In diesem Fall wird das Beschichtungsmaterial mittels einer Hochspannungselektrode ionisiert und aufgrund elektrostatischer Kräfte auf den zu beschichtenden Gegenstand aufgebracht. Dieser ist hierfür geerdet oder zumindest auf annähernd Massepotential gehalten. Zu den Betriebsmitteln gehören in diesem Fall auch die elektronischen Bauteile und Komponenten, die für das elektrostatische Arbeitsprinzip erforderlich sind.

Allgemein ausgedrückt sind unter Betriebsmitteln vorliegend technische Betriebsmittel im Sinne von einer oder mehreren technischen Betriebseinrichtungen zu verstehen; nicht gemeint sind Verbrauchsmaterialien und Arbeitsmedien oder dergleichen.

Bei bekannten Robotern sind die Betriebsmittel separat und insbesondere starr am Roboterarm befestigt. Aus diesem Grund sind nicht alle Bereiche der Betriebsmittel von außen derart gut zugänglich, wie es insbesondere für Wartungszwecke wünschenswert ist. Zu den von außen schlecht bis gar nicht zugänglichen Bereichen zählt insbesondere die dem Roboterarm zugewandte Seite der Betriebseinrichtung. Durch die Betriebsmittel wird häufig auch der Zugriff auf Komponenten und Bauteile des Roboters selbst erschwert, die im Inneren des Roboterarms untergebracht sind und bei denen es sich beispielsweise um elektronische Bauteile, Motoren, Kabelleitungen und dergleichen handeln kann. Wenn die Betriebsmittel oder bestimmte Komponenten und Bauteile des Roboters gewartet werden sollen, müssen die Betriebsmittel in diesem Fall in der Regel vorher demontiert werden.

Aus der DE 10 2006 043 604 A1, die einen Roboter gemäß dem Oberbegriff des Anspruchs 1 offenbart, ist es beispielsweise bekannt, dass die Tragstruktur über ein Gelenk an dem Roboterarm befestigt ist und als Baueinheit mit den daran angeordneten Betriebsmitteln vom Roboter abgeklappt werden kann. Auf diese Weise können die Betriebsmittel mit der Tragstruktur aus einer Betriebsstellung in eine Wartungsstellung und dabei von dem Roboter weggeschwenkt werden. Dadurch kann auf eine Demontage der Betriebsmittel und gegebenenfalls der Tragstruktur verzichtet werden. Einerseits werde in der Wartungsstellung der Tragstruktur die Betriebsmittel besser zugänglich, da diese dann nicht mehr vom Roboter abgeschirmt werden. Andererseits werden der Roboterarm und dessen Komponenten und Bauteile besser zugänglich, die vorher durch die Tragstruktur und die Betriebsmittel abgedeckt waren.

Diese bessere Zugänglichkeit ohne Demontage wird jedoch durch einen höheren Raumbedarf bei der Wartung erkauft, da die Tragstruktur in der abgeklappten Wartungsstellung in der Regel weit vom Roboterarm absteht. Auch nimmt die Gelenklagerung verhältnismäßig viel Bauraum im oder am Roboterarm ein, so dass der Roboterarm entsprechend groß dimensioniert werden muss, damit alle notwendigen Bauteile und Komponenten untergebracht werden können. Darüber hinaus ist gegebenenfalls auch in der Wartungsstellung der Tragstruktur noch immer ein Teil des Zugriffsweges auf die zu wartenden Bauteile und Komponenten durch die Tragstruktur oder einen Teil von dieser abgeschattet. In ungünstigen Konstellationen kann der Zugriff auf die benötigten Bauteile und Komponenten trotz der abgeklappten Tragstruktur noch immer nur erschwert möglich sein.

Daher ist es Aufgabe der Erfindung, eine Tragvorrichtung der eingangs genannten Art zu schaffen, durch welche die Wartung der Betriebsmittel und des mit diesen betriebenen Roboters und/oder Installationsarbeiten daran verbessert sind.

Diese Aufgabe wird durch einen Roboter gemäß Anspruch 1 gelöst.

Die Tragvorrichtung umfasst eine Führungseinrichtung, mittels welcher die Tragstruktur als Baueinheit verschiebbar gelagert ist.

Unter dem Begriff "Baueinheit" soll verstanden werden, dass die Tragstruktur im Gegensatz zu einer Schwenkbewegung um eine Schwenkachse an der Tragstruktur erfindungsgemäß als Ganzes verschoben werden kann. Durch diese Maßnahme können folglich die Tragstruktur und mit dieser die daran angeordneten Betriebsmittel einheitlich von dem Roboterarm weggeschoben werden, wodurch sonst von außen schlecht oder gar nicht zugängliche Bereiche der Betriebsmittel und des Roboterarms erreichbar werden, ohne dass noch eine Abschattung eines Teils des Zugriffsweges verbleibt. Auf diese Weise sind Wartungs- und/oder Installationsarbeiten erleichtert. Diese Verschiebung als Baueinheit kann auch in einer Schwenkbewegung erfolgen; in diesem Fall ist dann aber eine geometrische Schwenkachse vorhanden, die entfernt von der Tragstruktur angeordnet ist.

Dadurch, dass
der Roboter einen Roboterarm mit einem Armteil umfasst, welches einen Innenraum begrenzt, der durch eine Abdeckung verschließbar ist; und
die Tragstruktur zwischen einer Betriebsstellung, in welcher die Tragstruktur in dem Innenraum untergebracht ist, und einer davon verschiedenen Wartungsstellung verschiebbar ist,
können die Betriebsmittel im Betrieb des Roboters in dem durch die Abdeckung verschlossenen Innenraum untergebracht sein, wodurch sie vor Einwirkungen von außen geschützt sind. Durch die Tragvorrichtung kann dennoch ein Zugriff auf sowohl die Betriebsmittel als auch auf andere Bauteile und Komponenten des Roboters erfolgen, die im Innenraum angeordnet sind.

In diesem Zusammenhang ist es vorteilhaft, wenn die Tragstruktur in der Wartungsstellung zumindest weitgehend außerhalb des Innenraums des Armteils angeordnet ist.

Es ist vorteilhaft, wenn die Führungseinrichtung derart eingerichtet ist, dass die Tragstruktur zumindest teilweise in einer Linearbewegung verschiebbar ist. Vorzugsweise folgt der vollständige Bewegungsablauf der Tragstruktur einer Linearbewegung.

Alternativ oder ergänzend ist die Führungseinrichtung derart eingerichtet, dass die Tragstruktur zumindest teilweise entlang eines gekrümmten Bewegungsweges verschiebbar ist. Hier kann es günstig sein, wenn der vollständige Bewegungsablauf der Tragstruktur einer Bewegung entlang eines gekrümmten Bewegungsweges folgt. Die Art der Bewegung, ob linear, gekrümmt oder eine Kombination mehrere Bewegungsarten, kann insgesamt an die örtlichen Gegebenheiten angepasst werden.

Eine vorteilhafte Lösung besteht darin, dass die Führungseinrichtung als Teleskopeinrichtung ausgebildet ist. Bei einer Teleskopeinrichtung können beispielsweise Führungselemente, wie Schienen oder dergleichen, für die Tragstruktur entfallen, wodurch insgesamt der benötigte Bauraum kleiner gehalten werden kann.

Es ist außerdem vorteilhaft, wenn die Tragstruktur baueinheitlich lösbar an der Führungseinrichtung anbringbar und dadurch austauschbar ist.

Auf diese Weise ist die Möglichkeit geschaffen, dass ein Beschichtungs-Roboter verhältnismäßig schnell und unkompliziert im Hinblick auf mit der von ihm getragenen Applikationseinrichtung zusammenarbeitende Betriebsmittel angepasst werden kann.

Roboter in Beschichtungsanlagen können je nach Bedarf mit verschiedenen Applikationseinrichtungen ausgestattet werden. Bei verschiedenen Applikationseinrichtungen können wiederum unterschiedliche Betriebsmittel zum Betrieb derselben erforderlich sein. Wird nun bei einem Roboter eine Applikationseinrichtung ausgewechselt, so kann es vorkommen, dass andere Betriebsmittel notwendig sind, als diejenigen, welche bereits auf dem Roboter montiert sind. Dies bedeutet, dass neben der Applikationseinrichtung gegebenenfalls auch die Betriebsmittel ausgetauscht und/oder entfernt werden müssen. Aus diesem Grund kann die Stillstandzeit des Roboters und damit der Beschichtungsanlage beim Austausch einer Applikationseinrichtung unter Umständen verhältnismäßig lange ausfallen. Gleichzeitig kann die De- und Neuinstallation von Betriebsmitteln, die einzeln am Roboter befestigt sind, recht kompliziert und zeitaufwendig sein.

Auch ohne einen Wechsel der Applikationseinrichtung kann es vorkommen, dass Betriebsmittel entfernt oder zusätzlich installiert werden sollen. Dies kann z.B. dann der Fall sein, wenn der Lack zunächst mittels einer Förderpumpe zur Applikationseinrichtung gefördert wird, die Förderung des Lacks in Zukunft jedoch mittels eines Molches erfolgen soll, wie es an und für sich bekannt ist. Dann muss, bei unveränderter Applikationseinrichtung, die Förderpumpe entfernt und dafür beispielsweise eine Molchwechselstation als Betriebsmittel am Roboter angebracht werden.

Ausführungsbeispiele der Erfindung werden nachstehend anhand der Zeichnungen näher erläutert. In diesen zeigen:
- Figur 1: eine bezogen auf eine Abdeckung seitliche Ansicht eines Armabschnitts eines mehrachsigen Roboters, der eine Applikationseinrichtung trägt, wobei die Abdeckung eine Zugangsöffnung zu einem Innenraum eines Armteils verschließt;

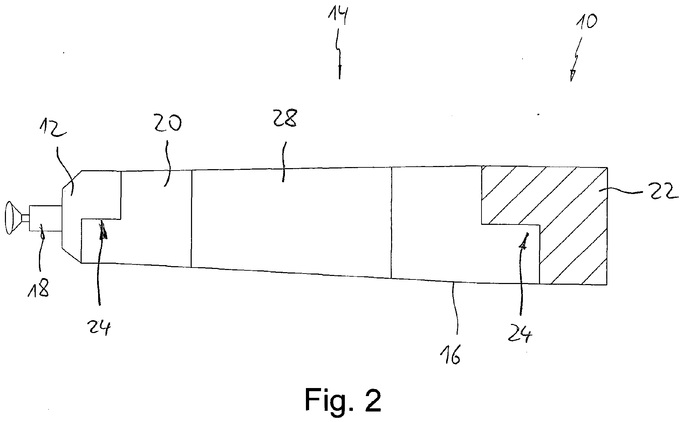

- Figur 2: eine Draufsicht auf den Armabschnitt mit Blick auf die Abdeckung;
- Figur 3: eine der Figur 1 entsprechende und teilweise weggebrochene seitliche Ansicht des Armabschnitts ohne Abdeckung, so dass in dem Innenraum des Armteils eine Tragstruktur gemäß einem ersten Ausführungsbeispiel, an welcher Betriebsmittel angeordnet sind, sowie Bauteile und Komponenten des Roboters erkennbar sind, wobei die Tragstruktur eine Betriebsstellung einnimmt;
- Figur 4: eine der Figur 3 entsprechende Ansicht des Armabschnitts, wobei die Tragstruktur als Baueinheit in eine Wartungsstellung verschoben ist;
- Figur 5: eine der Figur 2 entsprechende Draufsicht des Armabschnitts ohne Abdeckung, wobei in dem Innenraum des Armteils neben Bauteilen und Komponenten des Roboters eine Tragstruktur gemäß einem zweiten Ausführungsbeispiel mit Betriebsmitteln angeordnet ist, wobei diese Tragstruktur eine Betriebsstellung einnimmt;
- Figur 6: eine der Figur 5 entsprechende Ansicht des Armabschnitts, wobei die Tragstruktur als Baueinheit in eine Wartungsstellung verschoben ist.

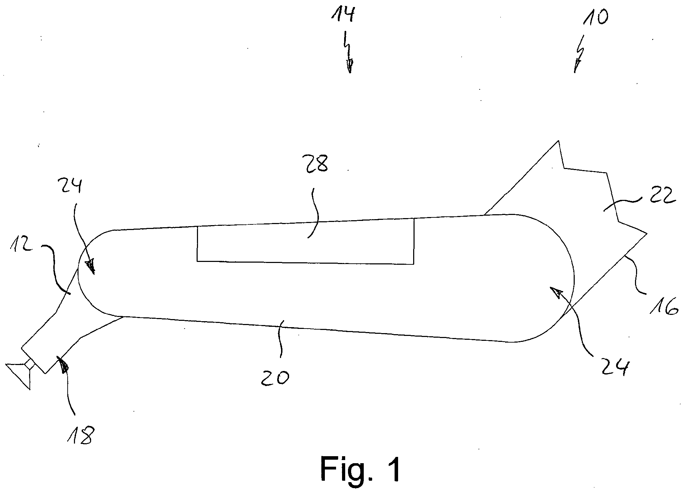

Figur 1 zeigt einen Armabschnitt 10 mit einem endständigen Gelenkkopf 12 eines beweglichen Roboterarms 14, der Teil eines hier nicht weiter interessierenden mehrachsigen Roboters 16 ist, wie er bei Lackieranlagen häufig verwendet wird. Der Gelenkkopf 12 trägt in an und für sich bekannter Weise eine schematisch angedeutete Applikationseinrichtung 18, welche beim vorliegenden Ausführungsbeispiel nach dem elektrostatischen Beschichtungsverfahren arbeitet, beispielsweise einen Hochrotationszerstäuber. Dazu ist die Applikationseinrichtung 16 mit einem hier nicht eigens gezeigten Hochspannungsgenerator verbunden, wie es an und für sich bekannt ist.

Wie eingangs erläutert, werden bei elektrostatischen Beschichtungsverfahren Beschichtungsmaterialien über eine Hochspannungselektrode ionisiert und mittels elektrostatischer Kräfte auf einen geerdeten oder wenigstens auf annähernd Massepotential gehaltenen zu beschichtenden Gegenstand aufgebracht.

Von dem Armabschnitt 10 des Roboters sind ein vorderes Armteil 20, das beweglich mit dem Gelenkkopf 12 verbunden ist, und ein hinteres Armteil 22 gezeigt, welches seinerseits beweglich mit dem vorderen Armteil 20 verbunden ist. Zur beweglichen Verbindung des Gelenkkopfes 12 und der Armteile 20, 22 miteinander ist jeweils eine Gelenk-/Getriebeeinheit 24 vorhanden, wie sie an und für sich bekannt ist.

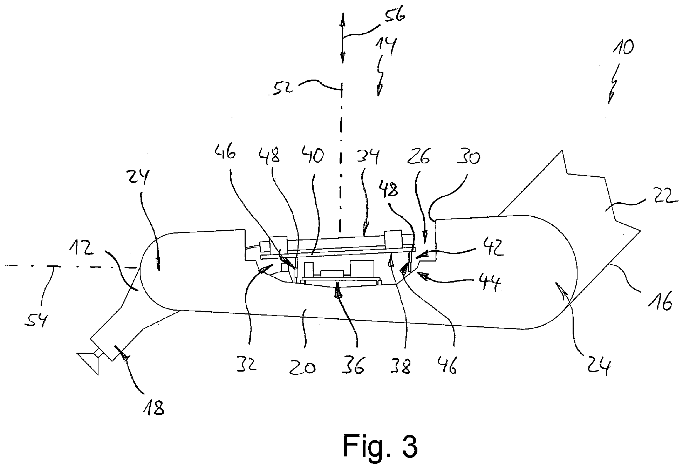

Der vordere Armteil 20 begrenzt einen Innenraum 26, welcher in den Figuren 3 bis 6 zu erkennen ist und im Betrieb des Roboters 16 durch eine Abdeckung 28 des vorderen Armteils 20 verschlossen ist, die in einer Zugangsöffnung 30 zum Innenraum 26 einsitzt.

In dem Innenraum 26 des vorderen Armteils 20 ist nun eine Tragvorrichtung 32 untergebracht, an welcher Betriebsmittel 34 angeordnet sind, die zum Betrieb der Applikationseinrichtung 18 erforderlich sind. Zu solchen Betriebsmitteln 34 zählen zum Beispiel Medienwechseleinheiten für Lösemittel und Druckluft, Versorgungseinheiten für Lösemittel, Druckluft und Farbe sowie Farbwechseleinheiten.

Außerdem befinden sich in dem Innenraum 26 des vorderen Armteils 20 noch Bauteile und Komponenten, die allgemein mit 36 bezeichnet und zum Betrieb und Bewegen des Roboters 16 bzw. des Roboterarms 14 notwendig sind. Hierbei kann es sich, wie eingangs angesprochen, beispielsweise um elektronische Bauteile, Motoren, Kabelleitungen oder -führungen und dergleichen handeln.

Die Tragvorrichtung 32 umfasst eine Tragstruktur 38, an welcher die Betriebsmittel 34 angebracht sind und die beim vorliegenden Ausführungsbeispiel als Tragplatte 40 ausgebildet ist. Im Betrieb des Roboters 16 nimmt die Tragstruktur 38 eine Betriebsstellung ein, in welcher die Tragstruktur 38 und die daran angeordneten Betriebsmittel 34 so in dem Innenraum 26 des vorderen Armteils 20 untergebracht sind, dass der Innenraum 26 mit der Abdeckung 28 verschlossen werden kann. Hierdurch sind alle im Innenraum 26 untergebrachten Komponenten vor einer Verschmutzung geschützt.

Die Tragstruktur 38 mit den Betriebsmitteln 34 ist dabei radial weiter außen angeordnet als die Bauteile und Komponenten 36 des Roboters 16. Diese können bei entfernter Abdeckung 28 von außen nicht ohne weiteres durch die Zugangsöffnung 30 erreicht werden, da die Zugangsöffnung 30 begrenzt ist und die Bauteile und Komponenten 36 des Roboters 16 durch die Tragstruktur 38 und die Betriebsmittel 34 abgeschattet werden. Jedoch sind auch die Betriebsmittel 34 an der Tragstruktur 38 nur eingeschränkt zugänglich, da die räumlichen Verhältnisse im Innenraum 26 des Armteils 20 beengt sind.

Damit die Zugänglichkeit zu den Betriebsmitteln 34 und zu den Bauteilen und Komponenten 36 des Roboters 16 im Falle einer Wartung verbessert werden kann, umfasst die Tragvorrichtung 32 eine Führungseinrichtung 42, mittels welcher die Tragstruktur 38 als Baueinheit verschiebbar gelagert ist. Hierdurch kann die Tragstruktur 38 als Ganzes und zusammen mit den Betriebsmitteln 34 in eine Wartungsstellung verschoben werden. Insbesondere kann die Tragstruktur 38 dabei aus dem Innenraum 26 des vorderen Armteils 20 heraus und von den Bauteilen und Komponenten 36 des Roboters 16 weg verschoben werden.

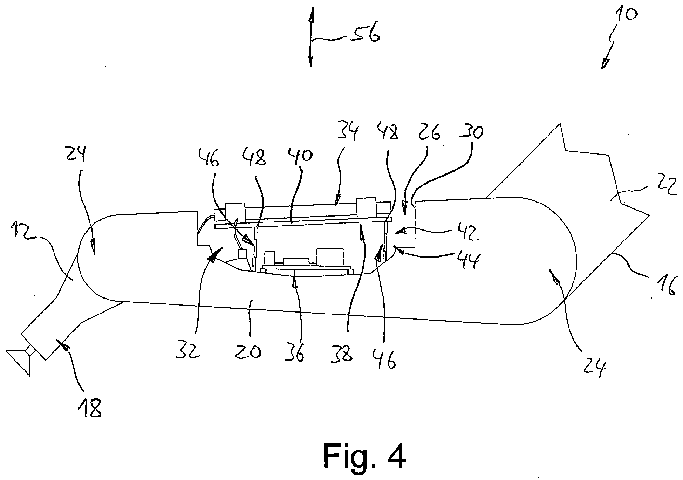

Figur 4 zeigt die Tragstruktur 38 mit den Betriebsmitteln in einer solchen Wartungsstellung. Wie dort zu erkennen ist, gibt es dort einen vergrößerten Abstand zwischen der Tragstruktur 38 mit den Betriebsmitteln 34 und den Bauteilen und Komponenten 36 des Roboters. Hierdurch sind die Bauteile und Komponenten 36 für eine Wartungsperson von außen besser zugänglich und können gegebenenfalls ausgetauscht, vor Ort repariert oder geprüft oder auch für eine Reparatur vorübergehend entnommen werden, ohne dass es Zugangsschwierigkeiten gibt. Auch die Betriebsmittel 34 an der Tragstruktur 38 sind in deren Wartungsstellung besser von außen für Wartungszwecke zugänglich.

Beim vorliegenden Ausführungsbeispiel ist die Führungseinrichtung 42 zu diesem Zweck als Teleskopeinrichtung 44 ausgebildet und umfasst mehrere Teleskoparme 46 mit mehreren, nicht eigens mit einem Bezugszeichen versehenen Teleskopgliedern. Ein Ende 48 der Teleskoparme 46 ist jeweils mit der Tragstruktur 38 verbunden, wogegen deren jeweils gegenüberliegendes, in den Figuren 3 und 4 nicht zu erkennendes Ende 50 im Innenraum 26 des Armteils 20 verankert ist.

Die Teleskoparme 46 können dabei auch lösbar mit der Tragstruktur 38 verbunden sein, so dass die Tragstruktur 38 zusammen mit den Betriebsmitteln 34 baueinheitlich von der Führungseinrichtung 42 abgenommen und gegen eine andere Tragstruktur 38, welche bereits mit anderen benötigten Betriebsmitteln 34 bestückt ist, ausgetauscht werden kann. Allgemein ausgedrückt, ist die Tragstruktur 38 baueinheitlich lösbar an der Führungseinrichtung 42 anbringbar und dadurch austauschbar.

Die Teleskoparme 46 können zwischen einer Kurzkonfiguration, in welcher die Teleskopglieder so weit wie möglich eingefahren sind, und einer Langkonfiguration, in welcher die Teleskopglieder so weit wie möglich ausgefahren sind, in ihrer Länge eingestellt werden. Die Längeneinstellung der Teleskoparme 46 kann motorisch oder manuell und dabei stufenlos oder gerastert erfolgen.

In der in Figur 3 gezeigten Betriebsstellung der Tragstruktur 38 befinden sich die Teleskoparme 46 entsprechend in der Kurzkonfiguration. Die Tragstruktur 38 kann nun, nachdem die Abdeckung 28 entfernt wurde, bei einer Wartung zusammen mit den Betriebsmitteln 34 in die Wartungsstellung verschoben werden, indem die Teleskoparme 46 ausgefahren werden. In der in Figur 4 gezeigten Wartungsstellung der Führungsstruktur 38 befinden sich die Teleskoparme 46 entsprechend in der Langkonfiguration.

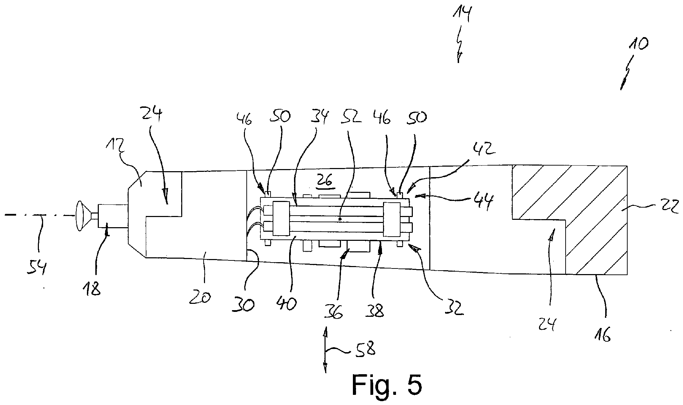

Bei dem in den Figuren 3 und 4 veranschaulichten Ausführungsbeispiel der Tragvorrichtung 32 ist deren Führungseinrichtung 42 derart ausgebildet, dass der Bewegungsweg der Tragstruktur 38 parallel zu einer Mittelachse 52 der Zugangsöffnung 30 verläuft, die senkrecht auf einer Längsachse 54 des Roboter-Armteils 20 steht. Die Achsen 52 und 54 sind lediglich in den Figuren 3 und 5 gezeigt.

Die Bewegungsrichtung der Tragstruktur 38 ist in den Figuren 3 und 4 durch einen Doppelpfeil 56 angedeutet. Wenn der Roboterarm 14 so ausgerichtet ist, dass die Mittelachse 52 der Zugangsöffnung 30 eine Vertikale bildet, kann die Tragstruktur 38 folglich durch die Führungseinrichtung 42 nach oben aus dem Innenraum 26 heraus angehoben und wieder nach unten in den Innenraum 26 hinein abgesenkt werden.

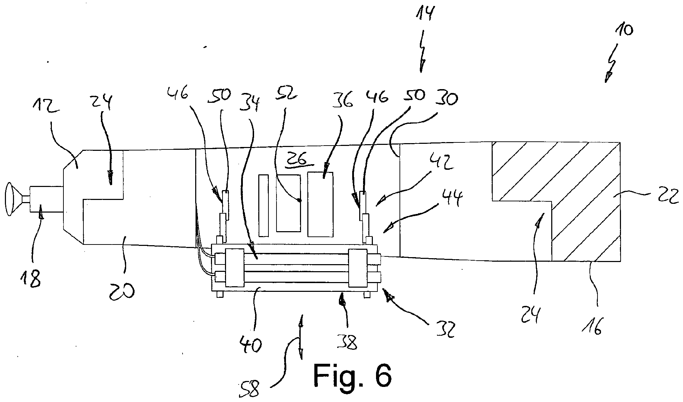

In den Figuren 5 und 6 ist der Roboterarm 14 mit einem zweiten Ausführungsbeispiel der Tragvorrichtung 32 gezeigt, wobei bereits erläuterte Komponenten mit denselben Bezugzeichen versehen sind. In den Figuren 5 und 6 sind die zweiten Enden 50 der Teleskoparme 46, nicht jedoch deren erste Enden 48 zu erkennen.

Dort ist die Führungseinrichtung 42 derart ausgebildet, dass der Bewegungsweg der Tragstruktur 38 bezogen auf die Mittelachse 54 der Zugangsöffnung 30 in radialer Richtung verläuft, was durch einen Doppelpfeil 58 angedeutet ist. Hierfür sind die Teleskoparme 46 entsprechend bezogen auf die Mittelachse 54 der Zugangsöffnung 30 zur Seite hin orientiert und erstrecken sich weitgehend in dieser Richtung 58.

Wenn der Roboterarm 14 so ausgerichtet ist, dass die Mittelachse 54 der Zugangsöffnung 30 eine Vertikale bildet, kann die Tragstruktur 38 folglich durch die Führungseinrichtung 42 in der Horizontalen aus dem Innenraum 26 heraus und wieder in den Innenraum 26 hinein geschoben werden.

Wie anhand Figur 6 ersichtlich ist, ist die Führungseinrichtung 42 dort derart eingerichtet, dass die Tragstruktur 38 in der Wartungsstellung zumindest weitgehend außerhalb des Innenraums 26 des Armteils 20 angeordnet ist. Ebenso befinden sich die an der Tragstruktur 38 angeordneten Betriebsmittel 34 außerhalb des Innenraums 26.

Damit die Führungsstruktur 38 zusammen mit den Betriebsmitteln 34 in der radialen Richtung 58 aus dem Innenraum 26 des Armteils 20 herausbewegt werden kann, ist die Zugangsöffnung 30 zum Innenraum 26 des Roboter-Armteils 20 entsprechend dimensioniert und erstreckt sich so weit in Umfangsrichtung des Armteils 20, wie es für den freien Durchgang der Führungsstruktur 38 und der Betriebsmittel 34 in die radiale Richtung erforderlich ist.

Bei beiden in den Figuren 3 bis 6 gezeigten Ausführungsbeispielen ist Führungseinrichtung 42 derart eingerichtet, dass die Tragstruktur in einer Linearbewegung verschiebbar ist.

Bei einer nicht eigens gezeigten Abwandlung kann die Tragstruktur 38 jedoch auch entlang eines gekrümmten Bewegungsweges verschoben werden. Für diesen Zweck können beispielsweise die Teleskopglieder der Teleskoparme 46 gekrümmt sein. Hierdurch ist z.B. möglich, dass die Tragstruktur 38 mit den Betriebsmitteln 34 einer Bogenbahn folgt und so beim Herausfahren aus dem Innenraum 26 des Armteils 20 nach oben und zur Seite bewegt werden kann, wenn die Zugangsöffnung 30 nach oben weist.

## Patentansprüche

1. Roboter zur Beschichtung von Gegenständen, welcher eine Applikationseinrichtung (18) zur Beschichtung von Gegenständen und zum Betrieb der Applikationseinrichtung (18) erforderliche Betriebsmittel (34) trägt,
wobei
eine Tragvorrichtung (32) für die Betriebsmittel (34) vorgesehen ist, mit einer Tragstruktur (38), an welcher die Betriebsmittel (34) anordenbar sind;
der Roboter (16) einen Roboterarm (14) mit einem Armteil (20) umfasst, welches einen Innenraum (26) begrenzt, der durch eine Abdeckung (28) verschließbar ist;
die Tragstruktur (38) zwischen einer Betriebsstellung, in welcher die Tragstruktur (38) in dem Innenraum (26) untergebracht ist, und einer davon verschiedenen Wartungsstellung verschiebbar ist,
**dadurch gekennzeichnet, dass**
die Tragvorrichtung (32) eine Führungseinrichtung (42) umfasst, mittels welcher die Tragstruktur (38) als Baueinheit verschiebbar gelagert ist.

2. Roboter nach Anspruch 1, **dadurch gekennzeichnet, dass** die Führungseinrichtung (42) derart eingerichtet ist, dass die Tragstruktur (38) in der Wartungsstellung zumindest weitgehend außerhalb des Innenraums (26) des Armteils (20) angeordnet ist.

3. Roboter nach Anspruch 1 oder 2, **dadurch gekennzeichnet, dass** die Führungseinrichtung (42) derart eingerichtet ist, dass die Tragstruktur (38) zumindest teilweise in einer Linearbewegung verschiebbar ist.

4. Roboter nach einem der Ansprüche 1 bis 3, **dadurch gekennzeichnet, dass** die Führungseinrichtung (42) derart eingerichtet ist, dass die Tragstruktur (38) zumindest teilweise entlang eines gekrümmten Bewegungsweges verschiebbar ist.

5. Roboter nach einem der Ansprüche 1 bis 4, **dadurch gekennzeichnet, dass** die Führungseinrichtung (42) als Teleskopeinrichtung (44) ausgebildet ist.

6. Roboter nach einem der Ansprüche 1 bis 5, **dadurch gekennzeichnet, dass** die Tragstruktur (38) baueinheitlich lösbar an der Führungseinrichtung (42) anbringbar und dadurch austauschbar ist.

## Claims

1. Robot for coating articles, which carries an application device (18) for coating articles and operating means (34) required for operating the application device (18),
wherein
a support apparatus (32) for the operating means (34) is provided, having a support structure (38) on which the operating means (34) are able to be arranged;
the robot (16) comprises a robot arm (14) having an arm part (20) which bounds an interior space (26) which is closable by a cover (28);
the support structure (38) is displaceable between an operating position, in which the support structure (38) is accommodated in the interior space (26), and a maintenance position different therefrom,
**characterized in that**
the support apparatus (32) comprises a guide device (42) by means of which the support structure (38) is mounted so as to be displaceable as a unit.

2. Robot according to Claim 1, **characterized in that** the guide device (42) is set up such that the support structure (38) is arranged at least largely outside the interior space (26) of the arm part (20) in the maintenance position.

3. Robot according to Claim 1 or 2, **characterized in that** the guide device (42) is set up such that the support structure (38) is displaceable at least in part in a linear movement.

4. Robot according to one of Claims 1 to 3, **characterized in that** the guide device (42) is set up such that the support structure (38) is displaceable at least in part along a curved movement path.

5. Robot according to one of Claims 1 to 4, **characterized in that** the guide device (42) is configured as a telescopic device (44).

6. Robot according to one of Claims 1 to 5, **characterized in that** the support structure (38) is attachable releasably as a unit to the guide device (42) and as a result is exchangeable.

## Revendications

1. Robot pour le revêtement d'objets, qui porte un équipement d'application (18) pour le revêtement d'objets et des moyens d'exploitation (34) nécessaires pour faire fonctionner l'équipement d'application (18),
sachant
qu'un dispositif porteur (32) est prévu pour les moyens d'exploitation (34), avec une structure porteuse (38) sur laquelle les moyens d'exploitation (34) peuvent être disposés ;
que le robot (16) comprend un bras de robot (14) avec une partie de bras (20) qui délimite un espace intérieur (26) qui peut être fermé par un élément de recouvrement (28);
que la structure porteuse (38) est mobile en translation entre une position d'exploitation, dans laquelle la structure porteuse (38) est logée dans l'espace intérieur (26), et une position d'entretien différente de la précédente,
**caractérisé en ce que**
le dispositif porteur (32) comprend un organe de guidage (42), au moyen duquel la structure porteuse (38) est montée à translation en tant qu'unité modulaire.

2. Robot selon la revendication 1, **caractérisé en ce que** l'organe de guidage (42) est conçu de telle sorte que la structure porteuse (38) est disposée, dans la position d'entretien, au moins dans une large mesure en dehors de l'espace intérieur (26) de la partie de bras (20).

3. Robot selon la revendication 1 ou 2, **caractérisé en ce que** l'organe de guidage (42) est conçu de telle sorte que la structure porteuse (38) est mobile en translation au moins en partie en un mouvement linéaire.

4. Robot selon l'une des revendications 1 à 3, **caractérisé en ce que** l'organe de guidage (42) est conçu de telle sorte que la structure porteuse (38) est mobile en translation au moins en partie le long d'une trajectoire de déplacement courbe.

5. Robot selon l'une des revendications 1 à 4, **caractérisé en ce que** l'organe de guidage (42) est réalisé sous la forme d'un organe télescopique (44).

6. Robot selon l'une des revendications 1 à 5, **caractérisé en ce que** la structure porteuse (38) peut être installée de manière amovible en tant qu'unité modulaire sur l'organe de guidage (42), et peut ainsi être remplacée.
